# EUROPÄISCHE PATENTSCHRIFT

(11) **EP 4 033 622 B1**
(45) Veröffentlichungstag und Bekanntmachung des Hinweises auf die Patenterteilung: **29.07.2026**
(21) Anmeldenummer: 22151732.9
(22) Anmeldetag: 17.01.2022
(51) Int. Cl.: H02G 3/18, H02G 3/14

(54) **UNTERFLUREINBAUKASSETTE**
UNDERFLOOR BUILT-IN CARTRIDGE
CASSETTE D'ENCASTREMENT DANS LE SOL

(30) Priorität: 22.01.2021 DE 202021100298 U
(43) Veröffentlichungstag der Anmeldung: 27.07.2022
(73) Patentinhaber: OBO Bettermann Hungary Kft., 2347 Bugyi (HU)
(72) Erfinder: Warkus, Kai, 51709 Marienheide (DE)
(74) Vertreter: Haverkamp Patentanwälte PartG mbB

(56) Entgegenhaltungen:
- EP-B1- 2 913 904
- DE-U1- 20 205 355
- US-A- 4 922 672
- US-A- 6 072 121

## Beschreibung

Die Erfindung betrifft eine Unterflureinbaukassette zum Unterflureinbau von elektrischen/elektronischen Installationen in einem Estrich umfassend ein unterbodenseitig angeschlossenes Unterflurinstallationsbauteil und eine Unterflureinbaukassette.

Elektrische und elektronische Installationen werden vielfach auch unterflur verlegt. Die hierfür eingesetzten Unterflur-Leitungsführungssysteme umfassen Kanäle und Unterflurdosen. Die Unterflurdosen dienen zum Einbau von elektrischen und/oder elektronischen Geräten sowie in vielen Fällen auch zur Bereitstellung eines Kabelein- bzw. -auslasses. Derartige Unterflurinstallationen werden in Estrichböden verwendet. Zur Bereitstellung eines Montagehohlraums dient eine auf dem Unterboden platzierte Unterflurdose, auf die eine Unterflureinbaukassette aufgesetzt ist. Die Unterflurdose ist Teil des Leitungsführungssystems und mit anderen Unterflurdosen durch Kanalsegmente verbunden. Eine auf eine solche Unterflurdose aufgesetzte Unterflureinbaukassette dient zum Bereitstellen eines die Estrichüberdeckung der Unterflurdose durchgreifenden Hohlraums. Eine solche Unterflureinbaukassette umfasst einen Kassettenrahmen, dessen oberer Abschluss bündig mit der Oberkante des Estrichs abzuschließen hat. Oberseitig ist der Kassettenrahmen, wenn in Benutzung, durch einen Deckel verschlossen.

Bei einem als Estrich ausgebildeten Bodenbelag handelt es sich in aller Regel um einen schwimmenden Bodenbelag, da dieser auf eine nachgiebige Isolierschicht aufgebracht wird. Die Isolierschicht dient unter anderem zur Trittschalldämmung. Vor dem Hintergrund der aus diesem Grunde gegebenen Belastungsnachgiebigkeit des Estrichs sind derartige Unterflureinbaukassetten von dem Estrich durch eine Bewegungsfuge entkoppelt. Daher verfügen derartige Unterflureinbaukassetten neben dem Kassettenrahmen über einen außenseitig zu diesem angeordneten Schalungsrahmen. Zwischen den beiden Rahmen befindet sich der für die Bewegungsentkopplung erforderliche Bewegungsspalt.

Zur Höheneinrichtung des Kassettenrahmens ist dieser, wie in EP 2 913 904 B1 beispielhaft beschrieben, über Nivellierschrauben auf der Bodenplatte der Unterflurdose des Unterbodens abgestützt. Mittels der Nivellierschrauben wird der obere Abschluss des Kassettenrahmens auf die gewünschte Estrichhöhe nivelliert.

Um ein Eindringen von Estrich beim Gießen bzw. Verteilen desselben in den oberseitig offenen Kassettenrahmen zu verhindern, wird bei der Unterflurkassette gemäß EP 2 913 904 B1 ein Estrichschutzdeckel verwendet, der auf den Kassettenrahmen aufgelegt wird. Durch diese Maßnahme kann diese vorbekannte Unterflureinbaukassette auch in einen überschleifbaren Estrich eingebaut werden. Ein solcher Estrich erhält seine Einbauhöhe erst durch einen nach Abbinden des Estriches durchgeführten Schleifprozess. Der Estrichschutzdeckel liegt auf der Kassette. Die oberste Estrichschicht wird bis auf die Oberkante der Kassettenrahmens abgeschliffen.

Der auf dem Unterflurinstallationsbauteil abgestützte umlaufende Schalungsrahmen schließt zugleich die seitliche Öffnung zwischen dem Kassettenrahmen und dem Unterflurinstallationsbauteil.

Eine weitere Unterflureinbaueinheit ist aus US 6 072 121 A bekannt. Offenbart ist in diesem Stand der Technik ein Zugang zu einem Unterflurkabelkanal. Der Kabelkanal ist im Estrich vergossen. Montiert auf der Oberseite des Kabelkanals befindet sich eine Installationskassette, die oberseitig durch einen Deckel abgeschlossen ist. Über Durchbrechungen im Boden dieser Kassette und einer entsprechenden Durchbrechung in der oberen Wand des Kabelkanals ist ein Zugang hergestellt. Die Kassette verfügt über Verriegelungshaken, mit denen die Installationskassette durch eine Steck-Schiebe-Bewegung an der oberen Wand des Kabelkanals befestigt wird. Einer dieser Verriegelungshaken untergreift den Rand der Zugangsöffnung des Kabelkanals. Zwei weitere Verriegelungshaken greifen in separate Durchbrechungen in dem Kabelkanal ein. Die Kassette sitzt mit ihrem Boden auf der Oberseite des Kabelkanals auf. Der Boden ist an einer Seite unter Ausbildung eines sich auf der Oberseite des Kabelkanals abstützenden Flansches verlängert. Die Installationskassette dieser Einbaueinheit ist gegenüber vertikalen Bewegungen des Estrichs entkoppelt.

Die als erforderlich angesehene Entkopplung der Unterflureinbaukassette von dem umgebenden Estrich hat v.a. bei einer höhergewichtigen Belastung des Estrichs, beispielsweise durch Flurförderverkehr, den Nachteil dass sich bei gewichtsbelastetem Estrich am Übergang vom Estrich zur nichtbelasteten Unterflureinbaukassette eine Stufe geringer Höhe einstellt, was im Belastungsfalle zu einer Rissbildung führen kann.

Ausgehend von diesem diskutierten Stand der Technik liegt der Erfindung daher die Aufgabe zugrunde, eine Unterflureinbaukassette vorzuschlagen, die hinsichtlich der für ihren Einbau benötigten Komponenten nicht nur vereinfacht ist, sondern bei der die vorstehend angesprochene Problematik einer Stufenausbildung bei unterschiedlicher Gewichtsbelastung von Estrich und Unterflureinbaukassette nicht gegeben ist.

Gelöst wird diese Aufgabe erfindungsgemäß durch eine Unterflureinbaueinheit mit den Merkmalen des Anspruchs 1.

Diese Unterflureinbaukassette ist im Unterschied zur herrschenden Lehre über seine zumindest eine außenseitig von diesem abragende Vergussstruktur mit dem Estrich verklammert. Durch die eine oder die mehreren Vergussstrukturen ist der Kassettenrahmen und damit die Unterflureinbaukassette in Bezug auf vor allem vertikale Bewegungen des Estriches gegenüber dem Unterboden an diesen gekoppelt. Derartige Bewegungen werden somit gleichermaßen von der Unterflureinbaukassette und dem daran angrenzenden Estrich mitgemacht. Der Kassettenrahmen dieser Unterflureinbaukassette ist auf dem Unterflurinstallationsbauteil, beispielsweise einer Unterflurdose oder einem Unterflurkanalsegment abgestützt, etwa mit einem von dem Kassettenrahmen nach außen abragenden Stützflansch. Ein solcher Stützflansch kann auf einfache Weise durch eine Abkantung des unteren Wandabschnittes des Kassettenrahmens bereitgestellt werden. Daher sind die Einsatzmöglichkeiten einer solchen Unterflureinbaukassette bereits aus diesem Grunde gegenüber herkömmlichen verbessert. Eine solche Abstützung der Unterflureinbaukassette erlaubt eine solche Ausgestaltung, bei der die Abstützung des Kassettenrahmens der Unterflureinbaukassette unter Zwischenschaltung einer Dämm- bzw. Isolationsschicht, typischerweise einer Trittschalldämmung, auf der der Estrich aufgebracht wird, an dem Unterflurinstallationsbauteil abgestützt ist bzw. von diesem getragen wird. Bei einer solchen Ausgestaltung ist nur die Unterflureinbaukassette schwimmend gelagert, während das Unterflurinstallationsbauteil starr an den Unterboden angeschlossen ist.

Dieses Konzept einer Unterflureinbaukassette zum Aufsatteln auf ein Unterflurinstallationsbauteil, wie etwa einer Unterflurdose, ist bemerkenswert, und zwar zum einen, da sich dieses von der herrschenden Lehre, ein solcher Kassettenrahmen müsse von dem benachbarten Estrich in Bezug auf Vertikalbewegungen entkoppelt sein, abwendet und dennoch deutliche Vorteile mit sich bringt. Hierdurch ist nicht nur das Verhalten einer solchen im Estrich eingebauten Unterflureinbaukassette mit dem angrenzenden Estrich dahingehend verbessert, dass ansonsten bei unterschiedlichen Belastungen entstehende Stöße zwischen dem Schalungsrahmen und dem Kassettenrahmen nicht mehr auftreten können. Vielmehr wird ein Schalungsrahmen nicht mehr benötigt. Beim Gegenstand dieser Unterflureinbaukassette bildet der Kassettenrahmen selbst den Schalungsrahmen. Durch die Abstützung an dem Unterflurinstallationsbauteil, wobei diese Abstützung umlaufend, zumindest jedoch weitgehend umlaufend ist, wird auch kein zusätzliches Schalungsteil benötigt, um ein Eindringen von Estrich in das Unterflurinstallationsbauteil zu verhindern. Somit werden weniger Bauteile benötigt. Hierdurch ist eine Montage bzw. ein Einbau vereinfacht. Durch die Abstützung der Unterflureinbaukassette bzw. ihres Kassettenrahmens in bzw. auf dem Unterflurinstallationsbauteil ist auch eine eigenständige bodenseitige Abstützung mittels Nivellierschrauben nicht erforderlich. Daher steht bei der Verwendung einer solchen Unterflureinbaukassette mit ihrem Kassettenrahmen mehr Installationsvolumen zur Verfügung, und zwar auch derjenige, der herkömmlich durch Nivellierschrauben blockiert bzw. nicht zugänglich war.

Eine Einrichtung des oberen Abschlusses der Unterflureinbaukassette kann über die Nivellierung des oberen Rahmenteils des Unterflurinstallationsbauteils erfolgen, und zwar wenn dieses auf das Unterflurinstallationsbauteil aufgesetzt ist. Durchaus möglich ist auch eine Auslegung der Unterflureinbaukassette, bei der der Kassettenrahmen mehrere Rahmenteile aufweist, die zur Höheneinrichtung des oberen Abschlusses der Unterflureinbaukassette teleskopartig in vertikaler Richtung gegeneinander verstellbar sind. Die Anzahl der Rahmenteile wird man in Abhängigkeit von dem gewünschten Nivellierbereich wählen. In vielen Fällen dürften bei einer solchen Ausgestaltung der Unterflureinbaukassette zwei Rahmenteile ausreichend sein, um den gewünschten Nivellierbereich abdecken zu können. Die Rahmenteile sind in vertikaler Richtung zueinander überlappend ausgelegt, sodass durch diese unabhängig von ihrer Einrichtung zueinander ein seitliches Eindringen von Estrich zwischen die beiden Rahmenteile verhindert ist.

Bei einer solchen mehrteiligen Auslegung des Kassettenrahmens ist typischerweise vorgesehen, dass zur Einrichtbarkeit des oberen Rahmenteils gegenüber dem unteren Rahmenteil das bezüglich der beiden Rahmenteile innenliegende Rahmenteil mehrere, sich in Verstellrichtung erstreckende Führungskulissen aufweist und dieses Rahmenteil mittels jeweils eines eine solche Führungskulisse durchgreifenden Befestigers, insbesondere eines Schraubbefestigers, an dem außenliegenden Rahmenteil festlegbar ist.

Als Vergussstrukturen zur Verklammerung des Kassettenrahmens mit dem angrenzenden Estrich können unterschiedliche Strukturen verwendet werden. Gemäß einem Ausführungsbeispiel ist vorgesehen, dass der Kassettenrahmen einen weitestgehend umlaufenden, nach außen abragenden Verklammerungsflansch trägt. Bei einer Auslegung des Kassettenrahmens mit eckiger Querschnittsgeometrie kann dieses dadurch erreicht werden, dass jede Seitenwand einen solchen Flansch trägt. Da der Kassettenrahmen in sich geschlossen ist, ist es grundsätzlich ausreichend, wenn Vergussstrukturen nur an den einander bezüglich des von dem Kassettenrahmen eingefassten Hohlraums gegenüberliegenden Seiten angeordnet sind, also beispielsweise bei einer eckigen Auslegung nur an zwei einander gegenüberliegenden Seitenwänden. Als Vergussstrukturen kommen beispielsweise auch zapfenförmige Strukturen in Frage, die im Rahmen dieser Ausführungen als Verklammerungszapfen angesprochen sind. Hierbei handelt es sich um Körper mit beispielsweise zylindrischer Mantelfläche. Ist eine Verklammerung auch in der Ebene des Estriches gewünscht, können derartige Zapfen einen zum Kassettenrahmen hin wirkenden Hinterschnitt aufweisen, beispielsweise durch eine vom Kassettenrahmen bis zum freien Ende eines solchen Verklammerungszapfens hin zunehmende Durchmesservergrößerung oder durch ein oder mehrere Verklammerungsflansche, die quer zur Längsachse des Verklammerungszapfens ausgebildet sind. Bei derartigen Verklammerungszapfen kann es sich beispielsweise um in Richtung zum Inneren des Kassettenrahmens hin offene Buchsen handeln, die mit einem Innengewinde ausgerüstet sind. Derartige Verklammerungszapfen dienen zugleich dem Zweck, dass diese zur Befestigung von Teilen innerhalb des Kassettenrahmens oder eines Rahmenteils dienen können. Diese können beispielsweise durch Einpressmuttern, angeschlossen an den Kassettenrahmen, bereitgestellt sein. Auch ist eine Kombination unterschiedlicher Vergussstrukturen möglich.

Zur Verbesserung der Anbindung des Kassettenrahmens an den umgebenden Estrich kann die Außenseite des Kassettenrahmens künstlich aufgeraut sein, beispielsweise durch Auftragen einer Epoxidharzschicht, die mit Quarzsand abgesandet ist. Hierdurch wird die Anbindungsoberfläche zwischen dem Estrich und dem Kassettenrahmen vergrößert und damit die Verklammerung verbessert. Die Vergussstruktur befindet sich bei einer solchen Ausgestaltung des Kassettenrahmens an dem außenliegenden Rahmenteil.

Ist der Kassettenrahmen zu der Höheneinrichtung seines oberen Abschlusses durch zwei oder mehr Rahmenteile nivellierbar, erfolgt eine Fixierung der eingerichteten Stellung der Rahmenteile zueinander beispielsweise mittels Schraubbefestigern. Diese können jeweils in einer mit einem Innengewinde ausgerüsteten Vergussstruktur, wie vorstehend beschrieben, festgelegt werden.

Zum Anschließen des Kassettenrahmens an ein Unterflurinstallationsbauteil verfügt die Unterflureinbaukassette über Anschlussmittel. Diese dienen dem Zweck, die Unterflureinbaukassette an dem Unterflurinstallationsbauteil zu fixieren. Diese werden entfernt, bevor der Estrich eingebracht wird. Grundsätzlich kann es sich bei den Mitteln zum Abstützen des Kassettenrahmens und bei den Anschlussmitteln um ein und dasselbe Mittel handeln. Bevorzugt ist jedoch eine Ausgestaltung, bei der die Abstützmittel und die Anschlussmittel voneinander unterschiedliche Mittel sind, beispielsweise dass die Abstützmittel als Stützflansch ausgeführt sind. Bei einer solchen Ausgestaltung braucht nur noch die Bewegbarkeit der Unterflureinbaukassette gegenüber dem Unterflurinstallationsbauteil in der von dem Unterflurinstallationsbauteil weg gerichteten vertikalen Richtung und ggf. in der Querebene dazu bereitgestellt zu werden. Als Anschlussmittel eignen sich hierfür beispielsweise Haltekrallen, die mit einem Hakenabschnitt einen am Unterflurinstallationsbauteil befindlichen Montageflansch untergreifen. Typischerweise wird man zwei Haltekrallen an einander bezüglich des von dem Kassettenrahmen eingefassten Hohlraums an gegenüberliegenden Seiten verwenden. Es ist ausreichend, wenn zwei derartige Anschlussmittel vorgesehen sind. Zumindest eine dieser Haltekrallen ist innenseitig an den Kassettenrahmen anschließbar. Die zweite Haltekralle kann Teil des Kassettenrahmens sein, sodass deren Hakenabschnitt mit der Montage des Kassettenrahmens in ihre den Montageflansch untergreifende Stellung bringbar ist. Die an der Innenseite des Kassettenrahmens anschließbare Haltekralle ist typischerweise mit einem Schraubbefestiger am Kassettenrahmen innenseitig festgelegt, wenn der Kassettenrahmen auf das Unterflurinstallationsbauteil aufgesetzt ist. Vorzugsweise dient ein mit einem Innengewinde ausgerüsteter Verklammerungszapfen, wie vorstehend beschrieben, zum Festsetzen des Schraubbefestigers. Die Haltekralle und der Montageflansch sind vorzugsweise dergestalt aufeinander abgestimmt, dass zugleich eine Fixierung in Querrichtung zur Hakenausstellrichtung erfolgt, beispielsweise dadurch, dass die Haltekralle oder ein Abschnitt derselben in eine entsprechende Ausnehmung des Montageflansches als Passung eingreifen.

Bevorzugt wird eine Ausgestaltung, bei der zwei derartige Haltekrallen als Anschlussmittel vorgesehen sind, die beide lösbar innenseitig am Kassettenrahmen befestigbar sind. Vorteilhaft bei der Auslegung eines solchen, lösbar an der Innenseite des Kassettenrahmens anschließbaren Anschlussmittels ist, dass dieses durch entsprechende Formgebung zugleich als Sperrelement genutzt werden kann, durch das der Einbau von Geräteträgern, wie beispielsweise Gerätebechern, innerhalb des Kassettenrahmens blockiert ist. Dieses hat den Vorteil, dass eine Bestückung mit Installationen erst möglich ist, wenn das bzw. die Anschlussmittel gelöst worden sind und somit der Kassettenrahmen sodann in allen Richtungen gegenüber dem Unterflurinstallationsbauteil schwimmend im Estrich gehalten ist. Ein solches Sperrelement kann beispielsweise dadurch realisiert sein, dass zumindest eine Haltekralle eine Platte mit einer davon an zumindest einer Seite angeformten, in den durch den Kassettenrahmen eingefassten Hohlraum hineinragende Sperrwand gebildet ist. Vorzugsweise erstreckt sich diese in vertikaler Richtung und ist an den Hakenfortsatz der Haltekralle für das Untergreifen des Montageflansches angeformt. Vorgesehen sein kann auch, dass eine solche Haltekralle zwei Sperrwände mit jeweils einem für das Untergreifen des Montageflansches vorgesehenen Hakenfortsatz aufweist.

Weitere Vorteile der Erfindung ergeben ist aus der nachfolgenden Beschreibung eines Ausführungsbeispiels unter Bezugnahme auf die beiliegenden Figuren. Es zeigen:
- **Fig. 1:**: Eine perspektivische Ansicht einer Unterflureinbaueinheit mit einer Unterflurdose und einer darauf aufgesetzten Unterflureinbaukassette nach Art einer Explosionsdarstellung,
- **Fig. 2:**: eine Seitenansicht mit Teilquerschnitten und einer durch die Unterflureinbaueinheit der Figur 1 mit den miteinander montierten Einzelbestandteilen,
- **Fig. 3:**: eine Alleindarstellung eines Montageringes mit einem als Ringkörper ausgeführten Montageflansch, angeschlossen an die Unterflurdose sowie zwei diesen untergreifende Haltekrallen der Unterflureinbaukassette,
- **Fig. 4:**: eine perspektivische Ansicht einer Haltekralle der Figur 3,
- **Fig. 5:**: eine Seitenansicht der Unterflureinbaueinheit der Figur 1 mit der Unterflureinbaukassette in der maximalen Höheneinrichtung ihres Kassettenrahmens und
- **Fig. 6:**: eine Querschnittsdarstellung der Einbaueinheit gemäß Figur 2, eingebaut in einen Estrichboden.

Eine Unterflureinbaueinheit 1 umfasst bei dem dargestellten Ausführungsbeispiel eine Unterflurdose 2 und eine darauf abgestützte Unterflureinbaukassette 3. Die Unterflureinbaueinheit 1 dient ebenso wie die Unterflurdose 2 zur Aufnahme von elektrischen/elektronischen Installationen. Bei der Unterflurdose 2 handelt es sich um eine handelsübliche Unterflurdose, in deren oberseitige Rahmenöffnung ein Montagering 4 eingesetzt. Dieser ist mit der Unterflurdose 2 verschraubt. Der Montagering 4 stellt mit seinem nach innen weisenden Randabschnitt einen Montageflansch 5 bereit.

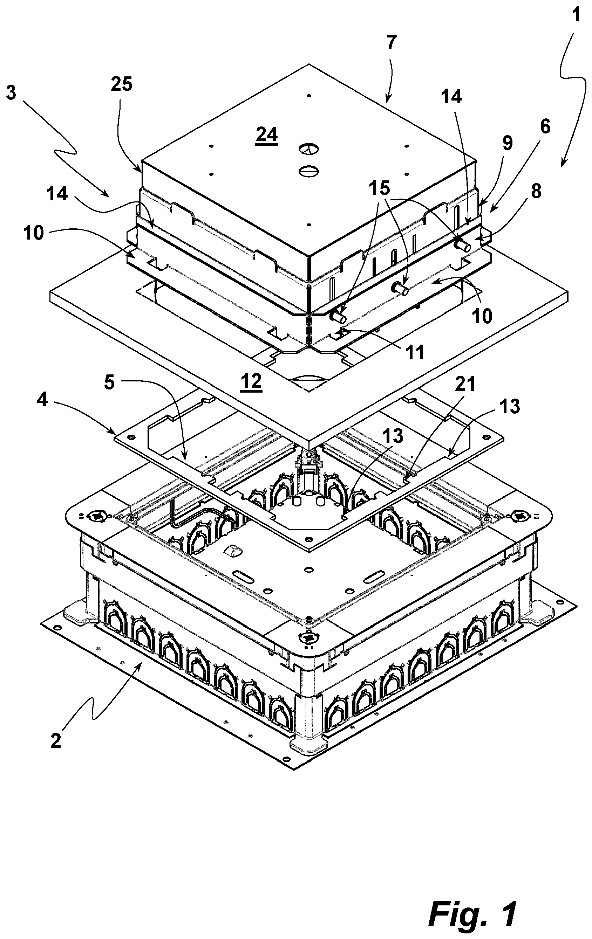

Die Unterflureinbaukassette 3 umfasst einen Kassettenrahmen 6. Der Kassettenrahmen 6 ist in der Darstellung der Figur 1 oberseitig durch einen Estrichschutzdeckel 7 verschlossen. Der Estrichschutzdeckel 7 liegt auf dem oberen Abschluss des Kassettenrahmens 6 lose auf. Der Kassettenrahmen 6 des dargestellten Ausführungsbeispiels ist durch zwei einzelne Rahmenteile 8, 9 bereitgestellt. Die beiden Rahmenteile 8, 9 sind in vertikaler Richtung gegeneinander verstellbar. Das Rahmenteil 9 überlappt in dieser Richtung mit dem Rahmenteil 8. Bei dem Rahmenteil 9 handelt es sich um das in Bezug auf den von dem Kassettenrahmen 6 eingefassten Hohlraum innenliegende Rahmenteil. Der Kassettenrahmen 6 ist umfänglich geschlossen. Das untere Rahmenteil 8 verfügt an seinen Seitenwänden als unteren Abschluss über jeweils einen nach außen ausgestellten Stützflansch 10. An jeder Seitenwand befinden sich in Verlängerung derselben über den unteren Abschluss des jeweiligen Stützflansches 10 hinaus zwei Positionierlaschen 11. Die Positionierlaschen 11 dienen bei dem dargestellten Ausführungsbeispiel zum Begrenzen der Verschiebbarkeit einer zwischen der Unterflurdose 2 und der Unterflureinbaukassette 3 befindlichen Isolierplatte 12. Dies ist bei dem dargestellten Ausführungsbeispiel der Fall. Zusätzlich können die Positionierlaschen 11, wenn diese eine hinreichende Länge aufweisen, bei auf der Unterflurdose 2 aufgesetzter Unterflureinbaukassette 3 jeweils in eine komplementäre Positionierkontur 13 des Montageflansches 5 eingreifen. In einem solchen Fall dienen die Positionierlaschen 11 und die Positionierkonturen 13 des Montageflansches 5 als Sicherung gegenüber einer Verschiebebewegung der Unterflureinbaukassette 3 gegenüber der Unterflurdose 2 in der Ebene des oberen Abschlusses der Unterflurdose 2. Die Positionierlaschen 11 und die Positionierkonturen 13 sind der Übersicht halber in der Figur nur zu der rechtsliegenden Seitenwand der Unterflureinbaukassette 3 kenntlich gemacht.

Die Isolierplatte 12 ist bezüglich ihrer Nachgiebigkeit ausgelegt, wie eine solche, die angrenzend zu der Unterflureinbaueinheit 1 ebenfalls als Trittschalldämmung im Estrichunterbau verwendet wird. Die Stützflansche 10 des Rahmenteils 8 der Unterflureinbaukassette 3 stützen sich in dem Zusammenbau der Unterflureinheit 1 auf der Oberseite der Isolierplatte 12 ab. Das untere Rahmenteil 8 des Kassettenrahmens 6 verfügt über nach außen abragende Vergussstrukturen. Bei diesen Strukturen handelt es sich zum einen um eine Abkantung des oberen Abschnittes jeder Seitenwand des unteren Rahmenteils 8 nach außen, sodass auf diese Weise jeweils ein Verklammerungsflansch 14 bereitgestellt ist. Bei dem dargestellten Ausführungsbeispiel verläuft jeder Verklammerungsflansch 14 parallel zu dem jeweiligen Stützflansch 10. Neben den Verklammerungsflanschen 14 tragen zwei einander gegenüberliegende Seitenwände nach außen abragende Verklammerungszapfen 15 - drei an der Zahl. Bei dem dargestellten Ausführungsbeispiel sind diese der in Figur 1 rechts erkennbaren Seitenwand sowie der dieser Seitenwand gegenüberliegenden Seitenwand zugeordnet.

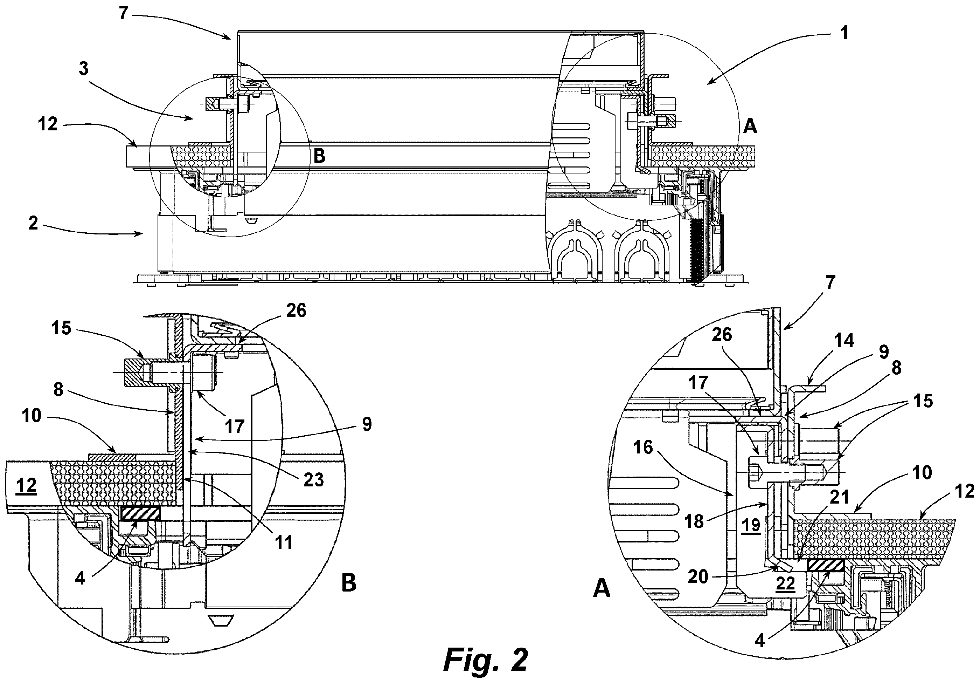

In der in Figur 2 gezeigten, zum Teil geschnittenen Seitenansicht der Unterflureinbaueinheit ist diese mit einer Einrichtung der beiden Rahmenteile 8, 9 mit minimaler Nivellierhöhe gezeigt, und zwar in einer Zusammenbaudarstellung. Auf der Oberseite der Unterflurdose 2 befindet sich die Isolierplatte 12. Auf dieser steht die Unterflureinbaukassette 3 mit den Stützflanschen 10 des unteren Rahmenteils 8 ihres Kassettenrahmens 6 auf. Die Abstützanordnung ist in den Ausschnittsvergrößerungen A und B vergrößert gezeigt. Erkennbar ist in dieser Figur die durch die Positionierlaschen 11 bewirkte Positionierung der Isolierplatte 12. Durch diese ist die Isolierplatte 12 gehindert, in den von dem Kassettenrahmen 6 eingefassten Hohlraum hineingeschoben zu werden. Die Schnittebenen der Teilschnitte der Ausschnittsvergrößerungen A und B befinden sich an unterschiedlichen Stellen. Während die Schnittlinie der Detaildarstellung A in der Ebene der Längsachse des mittleren Verklammerungszapfens 15 liegt, befindet sich der Schnitt gemäß der Detaildarstellung B entlang der Längsachse eines der beiden außenliegenden Verklammerungszapfen 15. Die Verklammerungszapfen 15 sind, wie aus den Detaildarstellungen erkennbar, bei dem dargestellten Ausführungsbeispiel durch Einpressmuttern bereitgestellt. Die Verklammerungszapfen 15 verfügen über eine zylindrische Mantelfläche und sind innenseitig als Buchse mit einem Innengewinde ausgerüstet und durch einen Pressvorgang an das untere Rahmenteil 8 des Kassettenrahmens 6 angeschlossen.

In dem in Figur 2 gezeigten Zusammenbau ist die Unterflureinbaukassette 3 an der Unterflurdose 2 durch zwei Haltekrallen 16 angeschlossen. Die beiden Haltekrallen 16 sind an den einander gegenüberliegenden Seitenwänden des Kassettenrahmens 6 jeweils lösbar an seine Innenseite, und zwar bei dem dargestellten Ausführungsbeispiel an die Innenseite des innenliegenden Rahmenteils 9 angeschlossen. Zur Fixierung werden Schraubbolzen 17 verwendet, die mit ihrem Gewindeschaft in dem Gewinde des jeweils mittleren Verklammerungszapfens 15 eingreifen.

Die Haltekrallen 16 sind dreidimensional konturiert. Ausgehend von einer Platte 18 verfügt jede Haltekralle 16 über zwei von der Platte 18 abgekantete Sperrwände 19, die in den von dem Kassettenrahmen 6 eingefassten Hohlraum hineinragen. Diese dienen zum einen einer Aussteifung der Haltekralle 16. Zum anderen dienen diese zur Blockierung des Einbaus eines zum Einbau in die Unterflureinbaukassette 6 vorgesehenen Gerätebechers. Ein solcher Einbau ist bei dem dargestellten Ausführungsbeispiel erst möglich, wenn die Haltekrallen 16 von dem Kassettenrahmen 6 entfernt worden sind. Die Haltekrallen 16 tragen am unteren Abschluss der Platte 18 einen nach außen hin abgewinkelten Passungsfortsatz 20. Dieser greift ein in eine komplementäre Passungsausnehmung 21 des Montageflansches 5. Das Eingreifen dieses Passungsfortsatzes 20 in die Passungsausnehmung 21 dient der Blockierung einer Verschiebbarkeit der Unterflureinbaukassette 3 gegenüber der Unterflurdose 2 in der Ebene ihres oberen Abschlusses. Aus diesem Grunde ist die Breite dieses Passungsfortsatzes 20 an die Breite der Passungsausnehmung 21 entsprechend angepasst. Dieser greift nur mit geringem Spiel in die Passungsausnehmung 21 in dieser Verschieberichtung ein.

Zum Fixieren der Unterflureinbaukassette 3 an der Unterflurdose 2 in vertikaler Richtung entgegen der Abstützrichtung tragen die Sperrwände 19 jeweils einen Hakenfortsatz 22, der den Montageflansch 5 des Montageringes 4 untergreift, wie dieses in der Detailvergrößerung A erkennbar ist.

Für die Höheneinrichtbarkeit der beiden Rahmenteile 8, 9 verfügt das innenliegende Rahmenteil 9 über in vertikaler Richtung ausgerichtete Führungskulissen 23. Bei dem dargestellten Ausführungsbeispiel sind diese als Langlöcher ausgeführt.

Der Estrichschutzdeckel 7 bei dem dargestellten Ausführungsbeispiel umfasst eine Deckelplatte 24 und einen Tragrahmen 25. Der Tragrahmen 25 ist, wie aus Figur 2 erkennbar, auf den oberen Abschluss des innenliegenden Rahmenteils 9 aufgesetzt, der zu diesem Zweck einen nach innen gerichteten Flansch 26 umfasst. In der abgesenkten Stellung des innenliegenden Rahmenteils 9 gegenüber dem außenliegenden Rahmenteil 8 befindet sich der Flansch 26 in einer gegenüber dem oberen Abschluss des außenliegenden Rahmenteils 8 abgesenkten Stellung. Somit wird in dieser Stellung durch den oberen Abschnitt des äußeren Rahmenteils 8 eine Aufnahme für den Estrichschutzdeckel 7 bereitgestellt.

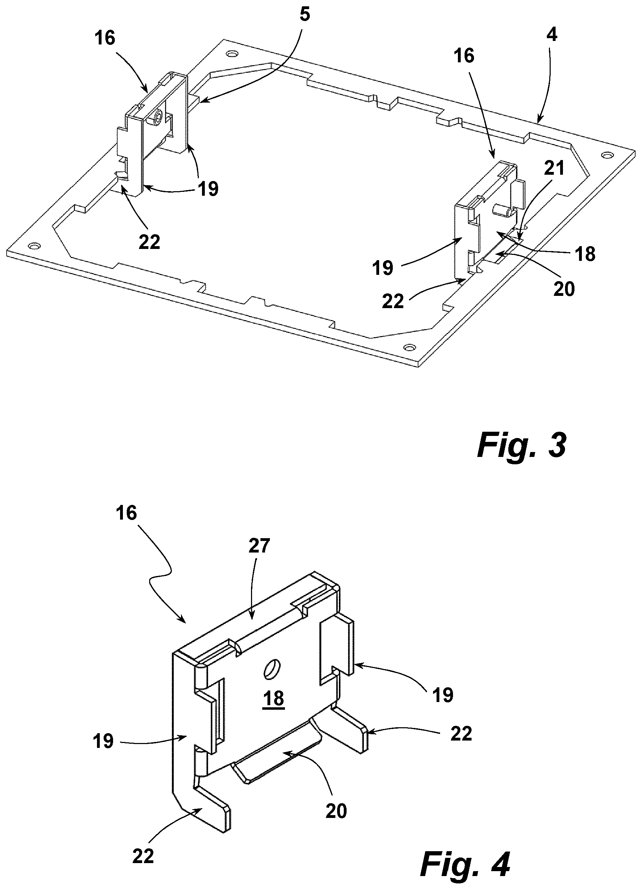

Figur 3 zeigt die beiden als Anschlussmittel zum Anschließen der Unterflureinbaukassette 3 an die Unterflurdose 2 als Haltekrallen 16 ausgeführten Anschlussmittel in einer Alleindarstellung zusammen mit dem Montagering 4. Deutlich erkennbar ist, dass die Hakenfortsätze 22 den Montageflansch 5 des Montageringes 4 untergreifen. Deutlich erkennbar ist ebenfalls der Eingriff des Passungsfortsatzes 20 in die Passungsausnehmung 21.

Neben den bereits vorstehend angesprochenen Bestandteilen einer solchen Haltekralle 16 verfügt diese, wie vor allem aus der Alleindarstellung in Figur 4 erkenntlich, ebenfalls über eine obere, gegenüber der Platte 18 abgekantete Wand 27.

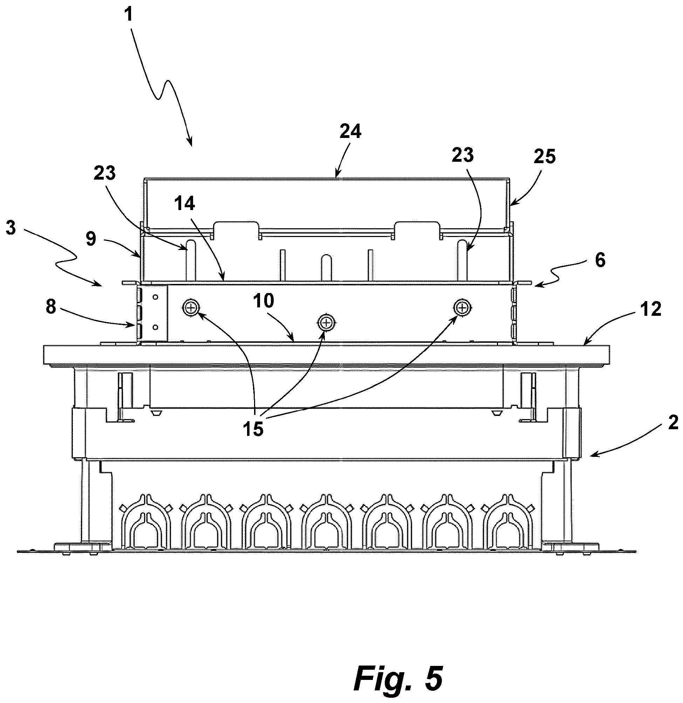

Im Unterschied zur Seitenansicht der Figur 2 zeigt die Seitenansicht der Figur 5 die Unterflureinbaueinheit 1 mit ihrer Unterflureinbaukassette 3 in der maximalen Höhe seines Kassettenrahmens 6. Das innenliegende Rahmenteil 9 ist gegenüber dem außenliegenden Rahmenteil 8 herausgezogen. Die Führungskulissen 23 sind nunmehr deutlich erkennbar.

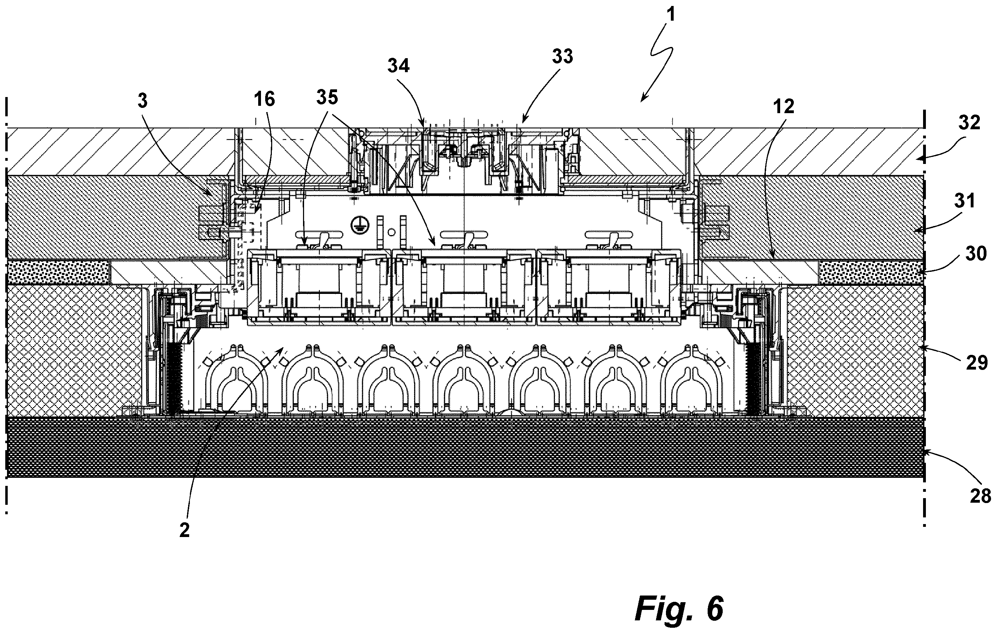

Die Unterflureinbaueinheit 1 dient zum Einbau in einen Estrichbodenaufbau. Figur 6 zeigt die Unterflureinbaueinheit 1 eingebaut in einen solchen Bodenaufbau. Auf einem Unterboden 28 ist die Unterflurdose 1 aufgestellt und gegenüber diesem fixiert, beispielsweise mit Schraubbefestigern. Auf dem Unterboden befindet sich eine Estrichdämmschicht 29. Diese erstreckt sich bis an den umlaufenden Seitenrand der Unterflureinbaudose 2. In Verlängerung der Isolierplatte 12 liegt auf der Estrichdämmschicht 29 eine Isolierschicht 30 für die Trittschalldämmung auf. Die Isolierschicht 30 ist elastisch weicher als die Estrichdämmschicht 29. Die Härte der Isolierschicht 30 entspricht derjenigen der Isolierplatte 12. Aus dieser Einbaudarstellung wird zudem erkennbar, dass durch die Isolierplatte 12, die so bemessen ist, dass diese sich bis an bzw. auch über den äußeren oberen Rand der Unterflurdose 2 erstreckt, nicht die Gefahr besteht, dass durch oberseitige Öffnungen Estrich in die Unterflurdose 2 eindringen kann. Vor dem Gießen eines Estrichs werden an der Unterflureinbaukassette 3 gegebenenfalls vorhandene, seitliche Öffnungen beispielsweise durch Klebeband verschlossen. Bei dem dargestellten Ausführungsbeispiel wird auf die Isolierplatte 12 bzw. die daran angrenzende Isolierschicht 30 ein Tragestrich 31 aufgebracht. Dieser erstreckt sich bei dem dargestellten Ausführungsbeispiel bis etwas oberhalb der Vergussstrukturen 14 des Rahmenteils 8 des Kassettenrahmens 6. Durch die Vergussstrukturen 14, 15 ist der Kassettenrahmen 6 an den Tragestrich 31 angeschlossen, macht mithin dessen vertikale Bewegungen mit. Als Sichtestrich 32 ist bei diesem Ausführungsbeispiel ein Terrazzo-Estrich aufgetragen und in Bezug auf die vorgesehene Höhe nach seinem Abbinden abgeschliffen worden ist.

In die oberseitige Öffnung des Kassettenrahmens 6 der Unterflureinbaukassette 3 ist ein Deckel 33 mit einem zentralen, vertikal verstellbaren Auslasstubus 34 eingesetzt.

Figur 6 zeigt die Unterflureinbaukassette 3 mit darin eingehängten Gerätebechern 35. Die Schnittlinie ist abgewinkelt und zeigt die Unterflureinbaukassette 3 mit einer Schnittlinie in der Längsachse des mittleren Verklammerungszapfen (links). Gestrichelt darin eingetragen ist eine zum Anschluss an die Unterflurdose 2 eingesetzte Haltekralle 16, die vor dem Einbau der Gerätebecher 35 entfernt worden ist. Die gestrichelte Darstellung der Haltekralle 16 verdeutlicht, dass ohne ein Entfernen derselben ein Einbau der Gerätebecher 35 blockiert wäre. Eine Fixierung der Unterflureinbaukassette 3 mittels der Haltekrallen 16 an der Unterflurdose 2 ist nach Abbinden des Estriches 31, 32 nicht mehr erforderlich. Die Unterflureinbaukassette 3 ist durch die Anbindung an den Tragestrich 31 fest mit diesem verankert. Dieses hat den besonderen Vorteil, dass Belastungsbewegungen, durch die der Tragestrich 31 oder auch die Unterflureinbaukassette 3 in vertikaler Richtung bewegt wird, das jeweils andere Teil gleichermaßen mitbewegt wird.

Die Erfindung ist vorstehend anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müssten.

### Bezugszeichenliste

| | | | |
|---|---|---|---|
| 1 | Unterflureinbaueinheit | 34 | Auslasstubus |
| 2 | Unterflurdose | 35 | Gerätebecher |
| 3 | Unterflureinbaukassette | | |
| 4 | Montagering | | |
| 5 | Montageflansch | | |
| 6 | Kassettenrahmen | | |
| 7 | Estrichschutzdeckel | | |
| 8 | Rahmenteil | | |
| 9 | Rahmenteil | | |
| 10 | Stützflansch | | |
| 11 | Positionierlasche | | |
| 12 | Isolierplatte | | |
| 13 | Positionierkontur | | |
| 14 | Verklammerungsflansch | | |
| 15 | Verklammerungszapfen | | |
| 16 | Haltekralle | | |
| 17 | Schraubbolzen | | |
| 18 | Platte | | |
| 19 | Sperrwand | | |
| 20 | Passungsfortsatz | | |
| 21 | Passungsausnehmung | | |
| 22 | Hakenfortsatz | | |
| 23 | Führungskulisse | | |
| 24 | Deckelplatte | | |
| 25 | Tragrahmen | | |
| 26 | Flansch | | |
| 27 | Wand | | |
| 28 | Unterboden | | |
| 29 | Estrichdämmschicht | | |
| 30 | Isolierschicht | | |
| 31 | Tragestrich | | |
| 32 | Sichtestrich | | |
| 33 | Deckel | | |

## Patentansprüche

1. Unterflureinbaueinheit zum Unterflureinbau von elektrischen/elektronischen Installationen in einem Estrich, umfassend ein unterbodenseitig anschließbares Unterflurinstallationsbauteil (2) und eine Unterflureinbaukassette (3), wobei die Unterflureinbaukassette (3) umfasst:
- einen oberseitig offenen Kassettenrahmen (6) mit mehreren, gemeinsam einen Ringkörper bildenden Seitenwänden und mit zumindest von einer von diesen nach außen abragenden, bei in den Estrich (31) eingebautem Kassettenrahmen (6) in den Estrich (31) eingreifenden Vergussstruktur (14, 15) zum Koppeln der Unterflureinbaukassette (2) in Bezug auf vertikale Bewegungen an den Estrich (31),
- Mittel zum Abstützen des Kassettenrahmens (6) auf oder an dem Unterflurinstallationsbauteil (2), etwa einer Unterflurdose, und
- Anschlussmittel (16) zum Anschließen des Kassettenrahmens (6) an das Unterflurinstallationsbauteil (2), welche Anschlussmittel (16) einen an dem Unterflurinstallationsbauteil (2) befindlichen Montageflansch (5) untergreifen, von welchen Anschlussmitteln (16) zumindest eines innenseitig an den Kassettenrahmen (6) angeschlossen ist,
- **dadurch gekennzeichnet, dass** die Unterflureinbaukassette (3) schwimmend durch den Eingriff der zumindest einen Vergussstruktur (14, 15) in den Estrich (31) gegenüber dem starr an den Unterboden (28) anschließbaren Unterflurinstallationsbauteil (2) lagerbar ist.

2. Unterflureinbaueinheit nach Anspruch 1, **dadurch gekennzeichnet, dass** es sich bei der zumindest einen nach außen abragenden Vergussstruktur um einen Flansch (14) handelt.

3. Unterflureinbaueinheit nach Anspruch 2, **dadurch gekennzeichnet, dass** bei einer eckigen Ausführung des Kassettenrahmens (6) zumindest von zwei einander gegenüberliegenden Seitenwänden ein Flansch (14) als Vergussstruktur nach außen abragt.

4. Unterflureinbaueinheit nach einem der Ansprüche 1 bis 3, **dadurch gekennzeichnet, dass** der Kassettenrahmen (6) mehrere, mit Abstand zueinander angeordnete Verklammerungszapfen (15) als Vergussstrukturen trägt, wobei eine erste Gruppe von Verklammerungszapfen (15) einer zweiten Gruppe an Verklammerungszapfen (15) bezüglich des von dem Kassettenrahmen (6) eingefassten Hohlraums gegenüberliegend angeordnet ist.

5. Unterflureinbaueinheit nach Anspruch 4, **dadurch gekennzeichnet, dass** die Verklammerungszapfen (15) als zur Innenseite des Kassettenrahmens (6) hin offene Buchsen mit einem Innengewinde ausge**führt** sind.

6. Unterflureinbaueinheit nach einem der Ansprüche 1 bis 5, **dadurch gekennzeichnet, dass** als Mittel zum Abstützen des Kassettenrahmens (6) auf dem Unterflurinstallationsbauteil (2) zumindest ein von diesem nach außen abragender Stützflansch (10) vorhanden ist, vorgesehen zur Auflage auf einer zwischen dem Unterflurinstallationsbauteil (2) und dem Stützflansch (10) befindlichen, nachgiebigen Dämmschicht (12) eines den Estrich (31, 32) tragenden Bodenaufbaus.

7. Unterflureinbaueinheit nach einem der Ansprüche 1 bis 6, **dadurch gekennzeichnet, dass** als Anschlussmittel zum Anschließen des Kassettenrahmens (6) an das Unterflurinstallationsbauteil (2) zwei einander bezüglich des von dem Kassettenrahmen (6) eingefassten Hohlraums gegenüberliegend angeordnete Haltekrallen (16) vorgesehen sind, die mit einem Hakenfortsatz (22) den am Unterflurinstallationsbauteil (2) befindlichen Montageflansch (5) untergreifen.

8. Unterflureinbaueinheit nach Anspruch 7, **dadurch gekennzeichnet, dass** zumindest eine der beiden Haltekrallen (16) mittels eines Schraubbefestigers (17) innenseitig an den Kassettenrahmen (6) angeschlossen ist.

9. Unterflureinbaueinheit nach Anspruch 8 in Rückbezug auf Anspruch 4, **dadurch gekennzeichnet, dass** der Schraubbefestiger (17) mit seinem Gewindeschaft in einem Verklammerungszapfen (15) festgesetzt ist.

10. Unterflureinbaueinheit nach einem der Ansprüche 7 bis 9, **dadurch gekennzeichnet, dass** beide Haltekrallen (16) mit einem Befestiger (17) innenseitig an den Kassettenrahmen (6) angeschlossen sind.

11. Unterflureinbaueinheit nach einem der Ansprüche 6 bis 11, **dadurch gekennzeichnet, dass** zumindest eine an den Kassettenrahmen anschließbare bzw. angeschlossene Haltekralle (16) eine Platte (18) mit einem von dieser in Richtung zum Kassettenrahmen (6) hin ausgestellten Kassettenrahmen (6) untergreifenden und in eine Passungsaussparung (21) des Montageflansches (5) eintauchenden Passungsfortsatz (20) aufweist.

12. Unterflureinbaueinheit nach einem der Ansprüche 1 bis 11, **dadurch gekennzeichnet, dass** zumindest eines der Anschlussmittel (16) als Sperrelement geformt ist, durch das der Einbau eines Gerätebechers (35) zur Aufnahme elektrischer/elektronischer Installationen in den Kassettenrahmen (6) blockiert ist.

13. Unterflureinbaueinheit nach Anspruch 12 in Rückbezug auf einen der Ansprüche 7 bis 11, **dadurch gekennzeichnet, dass** zumindest eine Haltekralle (16) eine Platte (18) mit einer davon an zumindest einer Seite angeformten, in den durch den Kassettenrahmen eingefassten Hohlraum hineinragenden Sperrwand (19) aufweist.

14. Unterflureinbaueinheit nach einem der Ansprüche 1 bis 13, **dadurch gekennzeichnet, dass** der Kassettenrahmen (6) mehrteilig ist und ein unteres Rahmenteil (8) und ein oberes Rahmenteil (9) umfasst, welche beiden Rahmenteile (8, 9) in vertikaler Richtung überlappend zueinander angeordnet sowie in vertikaler Richtung gegeneinander verstellbar und in ihrer Position zueinander einrichtbar sind.

15. Unterflureinbaueinheit nach einem der Ansprüche 1 bis 14, **dadurch gekennzeichnet, dass** der von den Anschlussmitteln (16) des Kassettenrahmens (6) zu untergreifende Montageflansch (5) des Unterflurinstallationsbauteils (2) Teil eines Montagerings (4) ist, der an den oberen Abschluss eines Unterflurinstallationsbauteils (2) angeschlossen ist.

## Claims

1. An underfloor built-in unit for built-in underfloor electrical/electronic installations in a screed, comprising an underfloor installation component (2) that can be connected to the underfloor side and an underfloor built-in cartridge (3), wherein the underfloor built-in cartridge (3) comprises:
- a cartridge frame (6) open at the top with several side walls forming a ring body together and with a casting structure (14, 15) projecting outwards from at least one of these and engaging the screed (31) when the cartridge frame (6) is built into the screed (31) for coupling the underfloor built-in cartridge (2) to the screed (31) with respect to vertical movements,
- means for supporting the cartridge frame (6) on or against the underfloor installation component (2), such as an underfloor box, and
- connection means (16) for connecting the cartridge frame (6) to the underfloor installation component (2), which connection means (16) engage under a mounting flange (5) located on the underfloor installation component (2), of which connection means (16) at least one is connected to the cartridge frame (6) on the inside,
- **characterized in that** the underfloor built-in cartridge (3) can be mounted floatingly by means of the engagement of the at least one casting structure (14, 15) in the screed (31) relative to the underfloor installation component (2) which can be rigidly connected to the underfloor (28).

2. The underfloor built-in unit according to claim 1, **characterized in that** the at least one casting structure projecting outwards is a flange (14).

3. The underfloor built-in unit according to claim 2, **characterized in that** in case of an angular embodiment of the cartridge frame (6), a flange (14) projects outwards as a casting structure from at least two opposing side walls.

4. The underfloor built-in unit according to any one of claims 1 to 3, **characterized in that** the cartridge frame (6) carries several clamping pins (15) arranged at a distance from each other as casting structures, wherein a first group of clamping pins (15) is arranged opposite a second group of clamping pins (15) with respect to the cavity enclosed by the cartridge frame (6).

5. The underfloor built-in unit according to claim 4, **characterized in that** the clamping pins (15) are embodied as bushings open towards the inside of the cartridge frame (6) with an internal thread.

6. The underfloor built-in unit according to any one of claims 1 to 5, **characterized in that** as a means for supporting the cartridge frame (6) on the underfloor installation component (2), at least one support flange (10) projecting outwards therefrom is present, provided for resting on a flexible insulating layer (12) of a floor structure carrying the screed (31, 32) located between the underfloor installation component (2) and the support flange (10).

7. The underfloor built-in unit according to any one of claims 1 to 6, **characterized in that**, as a connection means for connecting the cartridge frame (6) to the underfloor installation component (2), two retaining claws (16) arranged opposite each other with respect to the cavity enclosed by the cartridge frame (6) are provided, which engage under the mounting flange (5) located on the underfloor installation component (2) with a hook extension (22).

8. The underfloor built-in unit according to claim 7, **characterized in that** at least one of the two retaining claws (16) is connected to the cartridge frame (6) on the inside by means of a screw fastener (17).

9. The underfloor built-in unit according to claim 8 with reference to claim 4, **characterized in that** the screw fastener (17) is fixed with its threaded shaft in a clamping pin (15).

10. The underfloor built-in unit according to any one of claims 7 to 9, **characterized in that** both retaining claws (16) are connected to the cartridge frame (6) on the inside by means of a fastener (17).

11. The underfloor built-in unit according to any one of claims 6 to 11, **characterized in that** at least one retaining claw (16) that can be connected to or is connected to the cartridge frame has a plate (18) with a fitting extension (20) extending therefrom towards the cartridge frame (6) and engaging under the cartridge frame (6) and dipping into a fitting recess (21) of the mounting flange (5).

12. The underfloor built-in unit according to any one of claims 1 to 11, **characterized in that** at least one of the connection means (16) is shaped as a locking element, by which building a device cup (35) for receiving electrical/electronic installations into the cartridge frame (6) is blocked.

13. The underfloor built-in unit according to claim 12 with reference to any one of claims 7 to 11, **characterized in that** at least one retaining claw (16) has a plate (18) with a barrier wall (19) formed thereon on at least one side and projecting into the cavity enclosed by the cartridge frame.

14. The underfloor built-in unit according to any one of claims 1 to 13, **characterized in that** the cartridge frame (6) is multi-part and comprises a lower frame part (8) and an upper frame part (9), which two frame parts (8, 9) are arranged overlapping each other in the vertical direction and are adjustable relative to one another in the vertical direction and can be adjusted in their position relative to one another.

15. The underfloor built-in unit according to any one of claims 1 to 14, **characterized in that** the mounting flange (5) of the underfloor installation component (2) to be engaged under by the connection means (16) of the cartridge frame (6) is part of a mounting ring (4) which is connected to the upper termination of an underfloor installation component (2).

## Revendications

1. Unité d'encastrement de sol pour l'installation encastrée dans le sol d'installations électriques/électroniques dans une chape, comprenant un composant d'installation de sol raccordable du côté inférieur (2) et une cassette d'encastrement de sol (3), dans lequel la cassette d'encastrement de sol (3) comprend :
- un cadre de cassette (6) ouvert sur sa face supérieure, comportant plusieurs parois latérales formant conjointement un corps annulaire, et comportant au moins une structure de scellement (14, 15) faisant saillie vers l'extérieur à partir de l'une de celles-ci et, lorsque le cadre de cassette (6) est incorporé dans la chape (31), venant en prise dans la chape (31), pour coupler la cassette d'encastrement de sol (2) à la chape (31) en ce qui concerne les mouvements verticaux ;
- des moyens destinés à supporter le cadre de cassette (6) sur ou contre le composant d'installation de sol (2), par exemple une boîte de sol, et
- des moyens de raccordement (16) destinés à raccorder le cadre de cassette (6) au composant d'installation de sol (2), lesquels moyens de raccordement (16) viennent en prise sous une bride de montage (5) disposée sur le composant d'installation de sol (2), au moins l'un desdits moyens de raccordement (16) étant raccordé à la face interne du cadre de cassette (6),
- **caractérisée en ce que** la cassette d'encastrement de sol (3) est montable de manière flottante par la venue en prise de l'au moins une structure de scellement (14, 15) dans la chape (31), par rapport au composant d'installation de sol (2) pouvant être raccordé de manière rigide au sous-plancher (28).

2. Unité d'encastrement de sol selon la revendication 1, **caractérisée en ce que** l'au moins une structure de scellement faisant saillie vers l'extérieur est une bride (14).

3. Unité d'encastrement de sol selon la revendication 2, **caractérisée en ce que**, dans une réalisation angulaire du cadre de cassette (6), une bride (14) faisant office de structure de scellement fait saillie vers l'extérieur à partir d'au moins deux parois latérales opposées l'une à l'autre.

4. Unité d'encastrement de sol selon l'une quelconque des revendications 1 à 3, **caractérisée en ce que** le cadre de cassette (6) porte plusieurs ergots d'ancrage (15), disposés à distance les uns des autres, en tant que structures de scellement, dans laquelle un premier groupe d'ergots d'ancrage (15) est disposé en vis-à-vis d'un second groupe d'ergots d'ancrage (15) par rapport à la cavité délimitée par le cadre de cassette (6).

5. Unité d'encastrement de sol selon la revendication 4, **caractérisée en ce que** les ergots d'ancrage (15) sont réalisés sous la forme de douilles ouvertes vers la face interne du cadre de cassette (6) et pourvues d'un filetage intérieur.

6. Unité d'encastrement de sol selon l'une quelconque des revendications 1 à 5, **caractérisée en ce qu'**il est prévu, comme moyen de support du cadre de cassette (6) sur le composant d'installation de sol (2), au moins une bride de support (10) faisant saillie vers l'extérieur à partir de celui-ci, destinée à prendre appui sur une couche d'isolation compressible (12) d'une structure de plancher supportant la chape (31, 32), laquelle couche d'isolation compressible est disposée entre le composant d'installation de sol (2) et la bride de support (10).

7. Unité d'encastrement de sol selon l'une quelconque des revendications 1 à 6, **caractérisée en ce que**, comme moyens de raccordement destinés à raccorder le cadre de cassette (6) au composant d'installation de sol (2), il est prévu deux griffes de retenue (16) disposées en vis-à-vis l'une de l'autre par rapport à la cavité délimitée par le cadre de cassette (6), lesquelles griffes de retenue viennent en prise sous la bride de montage (5) disposée sur le composant d'installation de sol (2) au moyen d'une extension en crochet (22).

8. Unité d'encastrement de sol selon la revendication 7, **caractérisée en ce qu'**au moins l'une des deux griffes de retenue (16) est fixée à la face interne du cadre de cassette (6) au moyen d'un organe de fixation à vis (17).

9. Unité d'encastrement de sol selon la revendication 8 en référence à la revendication 4, **caractérisée en ce que** l'organe de fixation à vis (17) est fixé, par sa tige filetée, dans un ergot d'ancrage (15).

10. Unité d'encastrement de sol selon l'une quelconque des revendications 7 à 9, **caractérisée en ce que** les deux griffes de retenue (16) sont fixées, à la face interne, au cadre de cassette (6) au moyen d'un organe de fixation (17).

11. Unité d'encastrement de sol selon l'une quelconque des revendications 6 à 11, **caractérisée en ce qu'**au moins une griffe de retenue (16), raccordable ou raccordée au cadre de cassette (6), présente une plaque (18) comportant une saillie de centrage (20) s'étendant à partir de celle-ci en direction du cadre de cassette (6), venant en prise sous le cadre de cassette (6) dans sa partie tournée vers celui-ci et venant en prise dans un évidement d'ajustement (21) de la bride de montage (5).

12. Unité d'encastrement de sol selon l'une quelconque des revendications 1 à 11, **caractérisée en ce qu'**au moins l'un des moyens de raccordement (16) est configuré sous forme d'élément de verrouillage, par lequel l'installation d'un godet d'appareil (35) destiné à recevoir des installations électriques/électroniques dans le cadre de cassette (6) est bloquée.

13. Unité d'encastrement de sol selon la revendication 12, en référence à l'une quelconque des revendications 7 à 11, **caractérisée en ce qu'**au moins une griffe de retenue (16) présente une plaque (18) comportant, sur au moins un de ses côtés, une paroi de blocage (19) formée d'un seul tenant avec celle-ci et s'étendant dans la cavité délimitée par le cadre de cassette.

14. Unité d'encastrement de sol selon l'une quelconque des revendications 1 à 13, **caractérisée en ce que** le cadre de cassette (6) est réalisé en plusieurs parties et comprend une partie de cadre inférieure (8) et une partie de cadre supérieure (9), lesquelles deux parties de cadre (8, 9) sont disposées l'une par rapport à l'autre de manière chevauchante dans la direction verticale, réglables l'une par rapport à l'autre dans la direction verticale et ajustables en position l'une par rapport à l'autre.

15. Unité d'encastrement de sol selon l'une quelconque des revendications 1 à 14, **caractérisée en ce que** la bride de montage (5) du composant d'installation de sol (2), destinée à être mise en prise sous les moyens de raccordement (16) du cadre de cassette (6), fait partie d'une bague de montage (4) qui est raccordée à l'extrémité supérieure du composant d'installation de sol (2).
